**Europäisches Patentamt**

**European Patent Office**

**Office européen des brevets**

(19)

(11) Veröffentlichungsnummer : **0 051 723**
**B1**

(12)

# EUROPÄISCHE PATENTSCHRIFT

(45) Veröffentlichungstag der Patentschrift :
**10.09.86**

(21) Anmeldenummer : **81106992.1**

(22) Anmeldetag : **07.09.81**

(51) Int. Cl.⁴ : **F 02 D 43/00// F02D41/06, F02P5/04**

(54) Verfahren zum Betrieb eines elektronischen Steuersystems einer Brennkraftmaschine.

(30) Priorität : **08.11.80 DE 3042245**

(43) Veröffentlichungstag der Anmeldung :
**19.05.82 Patentblatt 82/20**

(45) Bekanntmachung des Hinweises auf die Patenterteilung : **10.09.86 Patentblatt 86/37**

(84) Benannte Vertragsstaaten :
**DE FR GB IT**

(56) Entgegenhaltungen :
DE-A- 2 511 974
FR-A- 2 029 418
FR-A- 2 166 193
FR-A- 2 437 497
US-A- 3 892 207
US-A- 4 128 082
US-A- 4 212 066

(73) Patentinhaber : **ROBERT BOSCH GMBH**
**Postfach 50**
**D-7000 Stuttgart 1 (DE)**

(72) Erfinder : **Auracher, Gerd**
**Ludwig-Müller-Strasse 10**
**D-7141 Grossbottwar (DE)**
Erfinder : **Clement, Albrecht, Dipl.-Ing.**
**Iltisweg 35**
**D-7014 Kornwestheim (DE)**
Erfinder : **Däumer, Rolf, Ing.(grad.)**
**Bleichstrasse 18**
**D-7252 Weil der Stadt 2 (DE)**
Erfinder : **Schwarz, Helmut, Dipl.-Phys.**
**Ulmenweg 27**
**D-7143 Vaihingen (DE)**
Erfinder : **Theml, Thomas**
**Traubenstrasse 9**
**D-7143 Vaihingen/Rosswag (DE)**
Erfinder : **Venzke, Wilfried, Dipl.-Ing.**
**Panoramaweg 8**
**D-7141 Möglingen (DE)**
Erfinder : **Virgilio, Gustav**
**Körnle 8**
**D-7057 Winnenden (DE)**
Erfinder : **Weichel, Bernhard, Dipl.-Ing.**
**Mähdachstrasse 26**
**D-7000 Stuttgart 31 (DE)**
Erfinder : **Wilfert, Thomas**
**Tiefenbacherstrasse 12**
**D-7140 Ludwigsburg 9 (DE)**

## Beschreibung

### Stand der Technik

Die Erfindung geht aus von einem Verfahren zum Betrieb eines elektronischen Steuersystems einer Brennkraftmaschine mit Signalerzeugerstufen für die Kraftstoffzumessung und die Zündung nach der Gattung des Hauptanspruchs.

Es ist seit langem bekannt, während des Starts einer Brennkraftmaschine vor allem im unteren Temperaturbereich eine Mehrmenge an Kraftstoff zuzumessen, um mögliche Kondensationsverluste aufgrund der kalten Ansaugrohr- und Zylinderinnenwände zu kompensieren. Es ist ebenfalls bekannt, diese Mehrmenge temperaturabhängig zu wählen und drehzahl- und zeitabhängig abzuregeln.

Die FR-A-2 166 193 offenbart ein elektronisches Kraftstoffeinspritzsystem, bei dem im kalten Zustand von Motor, Ansaugluft oder Kühlwasser eine erhöhte Kraftstoffmenge zugemessen wird.

Die DE-B-2 511 974 offenbar ein « Verfahren und Vorrichtung zur Kaltstartanhebung bei Kraftstoffeinspritzanlagen für Brennkraftmaschinen » mit einer temperaturabhängigen Anfangsmehrmenge und einer Abregelung dieser Mehrmenge zeitabhängig und von der Anzahl der Umdrehungen.

Schließlich zeigt die US-A-4 212 066 ein elektronisches Steuersystem für Kraftstoffzumeßsysteme mit einer im Kaltstartfall zu Beginn relativ hohen und auch konstant bleibenden Mehrmenge, die dann nach einer bestimmten Zeitdauer ausgehend von diesem Wert abgeregelt wird.

Auch auf den Zündungssektor gehören drehzahlabhängige Zündverstellungen während des Starts zum Stand der Technik.

Im Hinblick auf die immer schärfer werdende Abgasgesetzgebung, der Forderung nach immer besserem Startverhalten und des möglichst geringen Kraftstoffverbrauchs haben sich die bekannten Systeme jedoch als nicht optimal erwiesen.

### Vorteile der Erfindung

Mit den erfindungsgemäßen Verfahren zum Betrieb eines elektronischen Steuersystems einer Brennkraftmaschine lassen sich die aufgestellten Forderungen aufs Beste erfüllen. Die nach diesem Verfahren gesteuerten Brennkraftmaschinen zeichnen sich durch ruhiges und sicheres Startverhalten aus.

### Zeichnung

Verschiedene Diagramme zur Verdeutlichung der Erfindung sind in der Zeichnung dargestellt und werden im nachfolgenden näher beschrieben und erläutert. Es zeigen Figur 1 ein grobes Übersichtsschaubild eines elektronischen Brennkraftmaschinensteuersystems, Figur 2 ein Diagramm zum Verdeutlichen der Startanreicherung bei einem Kraftstoffeinspritzsystem, Figur 3 verschiedene Diagramme bezüglich Korrektureinflüssen und Figur 4 zwei Kennlinien für die Zündwinkelverstellung während des Starts.

### Beschreibung des Ausführungsbeispieles der Erfindung

Im folgenden wird speziell auf die Signalerzeugung im Startfall bei einem elektronischen Brennkraftmaschinensteuersystem eingegangen. Bei diesem System wird der Kraftstoff über Einspritzventile zugemessen, die intermittierend mit impulslängenmodulierten Signalen angesteuert werden.

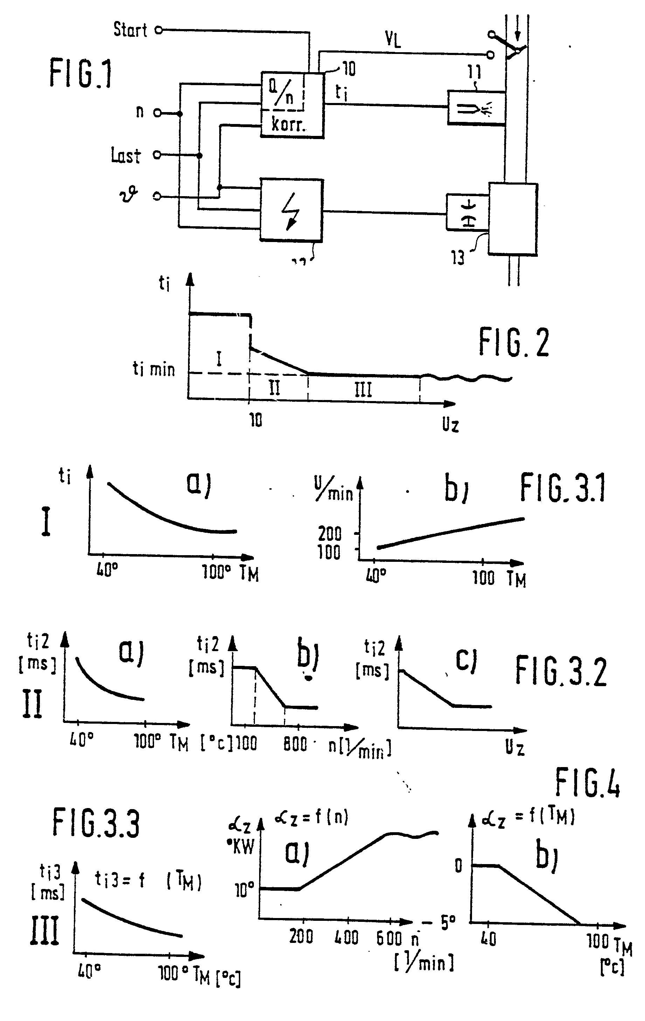

Nach Fig. 1 weist das elektronische Brennkraftmaschinensteuersystem eine Signalerzeugerstufe 10 für Einspritzimpulse ti auf, die wiederum Einspritzventile 11 ansteuern, sowie eine Signalerzeugerstufe 12 für die Zündung zum Ansteuern der Zündkerzen 13. Die wesentlichsten Eingangsgrößen für die beiden Signalerzeugerstufen 10 und 12 kommen von Sensoren für die Drehzahl, die Temperatur, und beim Start nur eventuell, die Last. Außerdem wird der Einspritzsignalerzeugerstufe 10 noch ein Startsignal zugeführt.

Die in Fig. 1 gezeigte Anordnung dient lediglich dazu, den Wirkungsbereich der Erfindung klarzumachen. Die eigentliche Erfindung liegt in der Wahl von Funktionsverläufen während des Starts bezüglich der zuzumessenden Kraftstoffmenge und des Zündzeitpunktes.

Auf eine schaltungsmäßige Ausführung wurde deshalb verzichtet, da moderne Brennkraftmaschinensteuersysteme rechnergesteuert sind und die jeweiligen Funktionen und Werte aus einem Speicher bei bestimmten Programmpunkten abrufbar sind.

Fig. 2 zeigt in prinzipieller Darstellung die Erfindung bezüglich der Kraftstoffzumessung. Aufgetragen ist in Fig. 2 die Einspritzimpulsdauer über der Anzahl der Umdrehungen. Erkennbar sind drei Abschnitte I, II und III mit jeweils unterschiedlichen Einspritzwerten.

Von Start wird im vorliegenden Fall dann gesprochen, wenn entweder der Startschalter geschlossen ist, oder jedoch bei eingeschalteter Zündung die Drehzahl noch kleiner als die Anschiebedrehzahl ist. Das Startende markiert in Fig. 2 das Ende des Bereichs III, nach dem die Nachstartphase folgt.

Entsprechend der Darstellung von Fig. 2 wird zu Beginn des Starts eine relative hohe Kraftstoffmenge eingespritzt. Zweckmäßigerweise erfolgt dies dadurch, daß pro Zündung, d. h. pro öffnenden Zylinder, ein Einspritzimpuls der Dauer ti erzeugt wird und dementsprechend die Einspritzventile gemeinsam über alle Zylinder öffnen. Im speziellen Beispiel nach Fig. 2 ist ein Festwert an Einspritzzeit während des Bereichs I gewählt, wobei dieser Festwert entsprechend der Darstellung nach Fig. 3.1a temperaturabhängig gewählt wird. Der Bereich I endet nach Überschreiten einer Drehzahlschwelle in Abhängigkeit von der Motortemperatur, wie z. B. in Fig. 3.1b dargestellt, zweckmäßigerweise jedoch spätestens nach Ablauf einer bestimmten Anzahl von Umdrehungen, z. B. 10, um ein sogenanntes Vollaufen der Brennkraftmaschine mit Sicherheit zu vermeiden.

Im Bereich II wird dann die Einspritzmenge temperatur-, drehzahl- und gesamtumdrehungszahl-abhängig reduziert bis auf einen Minimalwert. Dabei müssen nicht alle drei Parameter in diese Abregelung eingehen. Beispiele für Anfangswerte sowie Abregelkennlinien sind in Fig. 3.2a, b und c dargestellt. Auch wenn Fig. 3.2a mit Fig. 3.1a übereinstimmen mag, so sollen die beiden verschiedenen Kennlinien doch die Möglichkeit andeuten, den Anfangswert des Bereichs II gegenüber dem von Bereich I in anderer Weise temperaturabhängig zu wählen.

Fig. 3.2b verdeutlicht die Abregelung der Kraftstoffmenge über der Drehzahl. Nach dieser Kennlinie wird die Mehrmenge ausgehend von einem konstanten Wert etwa bis 100 Umdrehungen pro Minute linear zurückgenommen, wobei der Endwert dann etwa bei 600 Umdrehungen pro Minute erreicht wird.

Die aus Fig. 3.2c ersichtliche weitere Abregelung abhängig von der Gesamtumdrehungszahl einer Brennkraftmaschinenwelle, z. B. der Kurbelwelle, erfolgt linear, um schließlich in einen konstanten Wert überzugehen. Die Grenze zwischen den Bereichen II und III wird durch einen minimalen Kraftstoffmengenwert bestimmt, der dann bis zum Startende beibehalten wird. Daran schließt sich die Nachstartphase sowie die Warmlaufphase an. Zweckmäßigerweise wird die minimale Kraftstoffmenge (ti min) motortemperaturabhängig entsprechend der Darstellung nach Fig. 3.3 gewählt.

Aufgrund der feinstufigen Anpassungsmöglichkeit bei der Kraftstoffzumessung im Startfall lassen sich die einzelnen Kriterien optimieren, was letztlich zu einen guten Startverhalten und kostengünstigen Betrieb der Brennkraftmaschine führt.

Sollten durch irgendwelche Unzulänglichkeiten die Zündkerzen trotzdem mit Kraftstoff benetzt werden, dann ist ein Trocknungsprozeß dadurch einleitbar, daß Kraftstoffzumeßvorgänge unterbrochen werden. In vorteilhafter Weise läßt sich dies durch Offensteuerung der Drosselklappe erreichen und die Kraftstoffunterbrechung durch eine logische Verknüpfung von Vollastsignal mit einem Startsignal steuern.

Nach Fig. 4 wird während des Starts zur Unterstützung der Verbrennung der Zündwinkel abhängig von Drehzahl und Motortemperatur nach früh verstellt. Auch dadurch ergibt sich entsprechend den obengenannten Maßnahmen in Verbindung mit der Kraftstoffzumessung ein sicherer Start und ein ruhiges Anlaufen der Maschine. Nach Fig. 4a wird der Zündwinkel ausgehend von einem bestimmten Wert im Bereich von etwa 200 bis 600 Umdrehungen pro Minute kontinuierlich in Richtung früh verstellt, wobei die beiden Eckwerte bei etwa 10° und 20° Kurbelwellenwinkel liegen. Hinzu kommt die temperaturabhängige Zündwinkelverstellung entsprechend Fig. 4b. Aus der dort dargestellten Kennlinie ist die temperaturbedingte Zündwinkelverstellung bei sehr tiefer Temperatur (— 20 °C) 0 und wird bei steigender Temperatur, etwa bei + 80°, auf — 5° Kurbelwellenwinkel zurückgenommen.

Beide in Fig. 4 dargestellten Kennlinien wirken additiv, d. h., daß sie sich überlagern. So erfolgt beispielsweise ein Start bei — 40 °C ausgehend vom Zündwinkel $\alpha\, Z = 10°$, während bei einem Heißstart bei etwa 80 °C der anfängliche Zündwinkel nur etwa 5° Kurbelwelle beträgt.

Oberhalb von etwa 600 Umdrehungen ist dann die Leerlaufdrehzahl erreicht, der Startvorgang kann als abgeschlossen angesehen werden und die Zündwinkelverstellung richtet sich nach den allgemein bekannten Kriterien, bei denen z. B. noch die Last hinzukommt.

Die Verteilung der Kraftstoffmenge ist bei dem oben beschriebenen Beispiel so, daß die Einspritzventile aller Zylinder gleichzeitig öffnen, d. h. Vorlagerung bei den nicht betätigten Zylindern. Die Funktionen sind jedoch auch auf Einspritzsysteme anwendbar, bei denen nur der jeweils sich öffnende Zylinder mit Kraftstoff versorgt wird.

Die oben beschriebene Abregelung während Bereich II kann auch als beliebige Funktion über der Umdrehungszahl oder auch als Aufregelung erfolgen, je nach Motor und Kraftstoffbedarf.

Die Abregelung auf Bereich III kann auch anstatt auf einen minimalen temperaturabhängigen Kraftstoffmengenwert, wie oben beschrieben, auf einen Wert erfolgen, dem neben der Temperaturfunktion noch eine Drehzahlfunktion überlagert ist.

**Patentansprüche**

1. Verfahren zum Betrieb eines elektronischen Steuersystems einer Brennkraftmaschine mit Signalerzeugerstufen für die Kraftstoffzumessung und die Zündung und mit einer erhöhten Kraftstoffzumessung und einer Zündverstellung während des Starts, dadurch gekennzeichnet, daß diese erhöhte Kraftstoffzumessung in drei Phasen bzw. Bereichen erfolgt, wobei während der ersten Phase eine vorzugsweise temperaturabhängige konstante Mehrmenge zugemessen wird und die Dauer dieser Phase von der Drehzahl oder einem Maximalwert bezüglich der Anzahl von Umdrehungen einer Brennkraftmaschinenwelle abhängt, die zweite Phase eine Mehrmengenverminderung abhängig von wenigstens einer der Größen Motortemperatur, Drehzahl und Gesamtumdrehungszahl bis zu einem Grenzwert aufweist, die dritte Phase diesen vorzugsweise temperaturabhängigen Grenzwert bis zur Nachstartphase vorsieht, und die Zündung während des Starts abhängig von wenigstens Drehzahl und/oder Temperatur nach früh verstellt wird.

2. Verfahren nach Anspruch 1, dadurch gekennzeichnet, daß beim Kraftstoffzumeßsystem das Ende der ersten Phase durch einen temperaturabhängigen Drehzahlwert bestimmt wird.

3. Verfahren nach Anspruch 1, dadurch gekennzeichnet, daß beim Kraftstoffzumeßsystem eine drehzahlabhängige Abregelung der Mehrmenge während der zweiten Phase im Drehzahlbereich von vorzugsweise 100 bis 600 Umdrehungen pro Minute erfolgt.

4. Verfahren nach Anspruch 1, dadurch gekennzeichnet, daß eine von der Gesamtumdrehungszahl abhängige Abregelung während der zweiten Phase zu Beginn steil ist, anschließend flacher erfolgt oder in einen konstanten Bereich übergeht.

5. Verfahren nach Anspruch 1, dadurch gekennzeichnet, daß die Zündung während des Starts drehzahlabhängig nach früh verstellbar und der Verlauf der Frühverstellung temperaturabhängig ist.

6. Verfahren nach Anspruch 5, dadurch gekennzeichnet, daß die drehzahlabhängige Frühverstellung im Bereich von etwa 200 bis 400 Umdrehungen erfolgt.

7. Verfahren nach Anspruch 5, dadurch gekennzeichnet, daß die temperaturabhängige Spätverstellung ausgehend von vorzugsweise 0° Kurbelwellenwinkel oberhalb etwa — 20° einsetzt.

8. Verfahren nach wenigstens einem der Ansprüche 1 bis 7, dadurch gekennzeichnet, daß während des Starts auf einen Zündvorgang bei einem Zylinder ein Einspritzimpuls auf alle Zylinder (mit Vorlagerung) kommt.

9. Verfahren nach wenigstens einem der Ansprüche 1 bis 8, dadurch gekennzeichnet, daß zum Trockenblasen benetzter Zündkerzen die Kraftstoffzumessung durch logische Verknüpfung eines Starts- und Vollastsignals erfolgen kann.

10. Verfahren nach wenigstens einem der Ansprüche 1 bis 7, dadurch gekennzeichnet, daß während des Starts auf einen Zündvorgang bei einem Zylinder ein Einspritzimpuls auf einen sich öffnenden Zylinder kommt.

11. Verfahren nach Anspruch 1, dadurch gekennzeichnet, daß der Kurvenverlauf während der zweiten Phase eine beliebige Funktion über der Umdrehungszahl, insbesondere eine von der Gesamtumdrehungszahl abhängige Aufregelung aufweist.

12. Verfahren nach Anspruch 1, dadurch gekennzeichnet, daß der während der dritten Phase wirkende Signalwert ebenfalls eine Drehzahlabhängigkeit aufweist.

## Claims

1. Process for the operation of an electronic control system of an internal combustion engine with signal generator stages for fuel metering and ignition and with an increased fuel metering and an ignition adjustment during starting, characterized in that this increased fuel metering is performed in three phases or ranges, during the first phase a preferably temperature-dependent constant extra quantity being metered, and the duration of this phase depending on the speed or a maximum value with respect to the number of revolutions of an internal combustion engine shaft, the second phase having a reduction in extra quantity dependent on at least one of the parameters engine temperature, speed and total number of revolutions up to a limit value, the third phase providing this preferably temperature-dependent limit value up to the post-starting phase and the ignition being adjusted to be timed earlier during starting, dependent on at least speed and/or temperature.

2. Process according to Claim 1, characterized in that, in the fuel metering system, the end of the first phase is determined by a temperature-dependent speed value.

3. Process according to Claim 1, characterized in that, in the fuel metering system, a speed-dependent cut-off of the extra quantity is performed during the second phase in the speed range of preferably 100 to 600 revolutions per minute.

4. Process according to Claim 1, characterized in that a cut-off during the second phase dependent on the total number of revolutions is abrupt at the beginning, then is performed more gradually or goes into a constant range.

5. Process according to Claim 1, characterized in that the ignition during starting can be adjusted to be timed earlier, dependent on speed, and the course of the early timing adjustment is temperature-dependent.

6. Process according to Claim 5, characterized in that the speed-dependent early timing adjustment is performed in the range of about 200 to 400 revolutions.

7. Process according to Claim 5, characterized in that temperature-dependent delayed timing adjustment, starting from a camshaft angle of preferably 0°, takes effect above about — 20°.

8. Process according to at least one of Claims 1 to 7, characterized in that, during starting, an ignition with one cylinder is accompanied by an injection pulse to all cylinders (with advance setting).

9. Process according to at least one of Claims 1 to 8, characterized in that, for blowing-dry wetted spark plugs, fuel metering may be performed by means of logical combination of a start signal and a full-load signal.

10. Process according to at least one of Claims 1 to 7, characterized in that, during starting, an ignition with one cylinder is accompanied by an injection pulse to an opening cylinder.

11. Process according to Claim 1, characterized in that the course of the curve during the second phase has any function over the number of revolutions, in particular a cut-in dependent on the total number of revolutions.

12. Process according to Claim 1, characterized in that the signal value acting during the third phase likewise has a speed dependency.

**Revendications**

1. Procédé de mise en œuvre d'un système électronique de commande d'un moteur à combustion interne comportant des étages de production de signaux pour le dosage du carburant et pour l'allumage et comportant un dosage élevé en carburant et un décalage de l'allumage pendant le démarrage, caractérisé en ce que ce dosage élevé en carburant se fait en trois phases ou domaines, étant précisé que pendant la première phase on envoie un débit supplémentaire constant de préférence fonction de la température et que la durée de cette phase dépend de la vitesse de rotation ou d'une valeur maximale concernant le nombre de tours effectués par l'arbre d'un moteur à combustion interne ; que la seconde phase présente une diminution du débit supplémentaire, fonction d'au moins l'une des grandeurs température du moteur, vitesse de rotation et nombre total de tours effectués, jusqu'à une valeur limite ; que la troisième phase prolonge cette valeur limite, de préférence fonction de la température, jusqu'à la phase postérieure au démarrage ; et en ce que, pendant le démarrage, on règle l'allumage en fonction d'au moins la vitesse de rotation et/ou la température dans le sens de l'avance à l'allumage.

2. Procédé selon la revendication 1, caractérisé en ce que dans le système de dosage de carburant, la fin de la première phase est déterminée par une valeur de la vitesse de rotation fonction de la température.

3. Procédé selon la revendication 1, caractérisé en ce que dans le système de dosage du carburant, il se fait une régulation du débit supplémentaire en fonction de la température pendant la seconde phase, dans le domaine de vitesse de rotation allant de préférence de 100 à 600 tours par minute.

4. Procédé selon la revendication 1, caractérisé en ce qu'une régulation fonction du nombre total de tours effectués, pendant la seconde phase, est à forte pente au début, puis à faible pente ou bien se transforme en une valeur constante.

5. Procédé selon la revendication 1, caractérisé en ce que, pendant le démarrage, on peut décaler l'allumage dans le sens de l'avance à l'allumage en fonction de la vitesse de rotation et en ce que la courbe du réglage dans le sens de l'avance à l'allumage est fonction de la température.

6. Procédé selon la revendication 5, caractérisé en ce que le réglage dans le sens de l'avance à l'allumage, fonction de la température, se fait dans le domaine allant d'environ de 100 à 400 tours.

7. Procédé selon la revendication 5, caractérisé en ce que le réglage, dans le sens du retard d'allumage, fonction de la température se fait en partant de préférence d'un angle de 0° sur le vilebrequin au-dessus d'environ — 20°.

8. Procédé selon au moins l'une des revendications 1 à 7, caractérisé en ce que, pendant le démarrage, une impulsion d'injection sur tous les cylindres (avec préstockage) donne un processus d'allumage dans un seul cylindre.

9. Procédé selon au moins l'une des revendications 1 à 8, caractérisé en ce que pour sécher des bougies d'allumage noyées, le dosage de carburant peut se faire par liaison logique d'un signal de démarrage et d'un signal de pleine charge.

10. Procédé selon au moins l'une des revendications 1 à 7, caractérisé en ce que, pendant le démarrage, une impulsion d'injection sur un cylindre dont la soupape s'ouvre donne un processus d'allumage dans un cylindre.

11. Procédé selon la revendication 1, caractérisé en ce que l'allure de la courbe pendant la seconde phase présente une fonction quelconque de la vitesse de rotation, en particulier un suivi de régulation fonction du nombre total de tours effectués.

12. Procédé selon la revendication 1, caractérisé en ce que la valeur de signal intervenant pendant la troisième phase est également fonction de la vitesse de rotation.

FIG.1

FIG.2

FIG.3.1

FIG.3.2

FIG.3.3

FIG.4